# EUROPÄISCHE PATENTSCHRIFT

(11) **EP 3 445 679 B1**
(45) Veröffentlichungstag und Bekanntmachung des Hinweises auf die Patenterteilung: **27.04.2022**
(21) Anmeldenummer: 17720041.7
(22) Anmeldetag: 20.04.2017
(51) Int. Cl.: B65G 1/04

(54) **LAGER- UND KOMMISSIONIERSYSTEM ZUM AUSLAGERN VON HANDHABUNGSEINHEITEN**
STORAGE AND PICKING SYSTEM FOR RETRIEVING HANDLING UNITS
SYSTÈME DE STOCKAGE ET DE PRÉPARATION DE COMMANDES SERVANT AU DÉSTOCKAGE D'UNITÉS DE MANUTENTION

(30) Priorität: 20.04.2016 DE 102016107258; 27.04.2016 DE 102016107807
(43) Veröffentlichungstag der Anmeldung: 27.02.2019
(73) Patentinhaber: SSI Schäfer Automation GmbH (AT), 8051 Graz (AT)
(72) Erfinder: WINKLER, Max, 8010 Graz (AT)
(74) Vertreter: Witte, Weller & Partner Patentanwälte mbB
(86) Internationale Anmeldenummer: PCT/EP2017/059342
(87) Internationale Veröffentlichungsnummer: WO 2017/182547

(56) Entgegenhaltungen:
- EP-A1- 1 028 074
- DE-A1- 3 221 026
- DE-A1- 10 157 121
- DE-U1- 29 615 090
- DE-U1-202006 001 158
- DE-U1-202006 003 068
- JP-A- S56 117 902
- JP-U- S63 197 210
- US-A1- 2016 060 037

## Beschreibung

Die vorliegende Erfindung betrifft ein Lager- und Kommissioniersystem zum Auslagern von Handhabungseinheiten zwecks Durchführung einer Kommissionierung, wobei das System aufweist: eine Regalanordnung; Gassenwechseleinheiten; Regalbediengeräte; und Vertikalförderer.

Ähnlich aufgebaute herkömmliche Lager- und Kommissioniersysteme sind in den Dokumenten DE 10 2012 107 176 A1, EP 2 287 093 A1 und WO 2007/134840 A2 offenbart.

Die DE 20 2004 012 021 U1 offenbart ein sogenanntes Lagerliftsystem. Die DE 10 2006 008 932 A1 offenbart ebenfalls ein Lagerliftsystem. Die EP 2 949 605 A1 offenbart ein Shuttle-Regalsystem. Die DE 101 05 706 A1 offenbart ein Shuttle-Regalsystem. Die DE 10 2007 016 453 A1 offenbart ein Kommissioniersystem mit einem Zentralband. Die EP 1 813 556 A1 offenbart ein Lagersystem.

Die WO 2007/134840 A2 offenbart eine herkömmliche Regalanordnung, bei der die Ein-/Auslagerung von Handhabungseinheiten über Vertikalförderer erfolgt, die in größerer Anzahl entlang äußerer Längsseiten der Regalanordnung angeordnet sind. Die klassische Ein-/Auslagerung über die Stirnseiten der Regalanordnung in der Längsrichtung der Regalanordnung wird so vermieden. Ein gassenübergreifender Austausch der Handhabungseinheiten innerhalb der Regalanordnung in der Querrichtung der Regalanordnung findet nicht statt.

Die DE 10 2012 107 176 A1 stellt ein Beispiel des klassischen Ansatzes der Ein-/Auslagerung der Handhabungsseiten über die Stirnseite der Regalanordnung in der Längsrichtung der Regalanordnung dar. Jedoch sind innerhalb der Regalanordnung zusätzlich Gassenwechseleinheiten vorgesehen, die einen gassenübergreifenden Austausch von Handhabungseinheiten in der Querrichtung der Regalanordnung innerhalb der Regalanordnung ermöglichen, ohne dass die Handhabungseinheiten in der Längsrichtung über die Stirnseite die Regalanordnung bewegt werden müssen, um außerhalb der Regalanordnung die Gasse in der Querrichtung zu wechseln. Vertikalförderer sind nur im stirnseitigen Bereich der Regalanordnung vorgesehen. Innerhalb der Regalanordnung sind keine Vertikalförderer vorgesehen. Lediglich die Gassenwechseleinheiten sind in die Regale der Regalanordnung integriert.

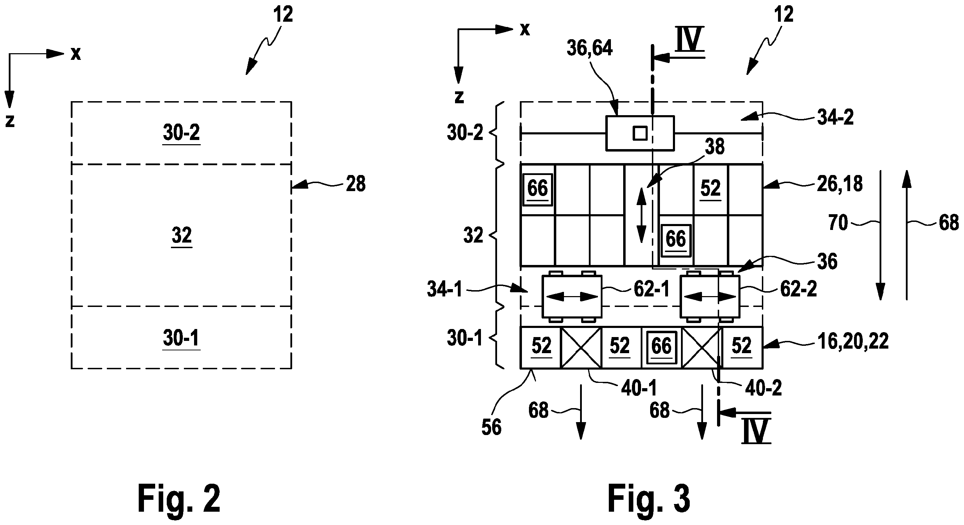

Die EP 2 287 093 A1 offenbart ebenfalls eine Regalanordnung, bei der die Ein-/Auslagerung der Handhabungseinheiten in/aus der Regalanordnung in einer Querrichtung der Regalanordnung erfolgt. Klassische stirnseitige Vertikalförderer gibt es nicht. Die Vertikalförderer sind in die Lagerregale der Regalanordnung integriert. Jedoch sind die Vertikalförderer nicht nur ausschließlich im Bereich der äußeren Regale der Regalanordnung vorgesehen, sondern jedes der Regale, auch die Regale innerhalb der Regalanordnung, weist über seine Länge verteilt jeweils mehrere integrierte Vertikalförderer auf. Diese regalintegrierten Vertikalförderer werden über erste zwangsgeführte Bahnfahrzeuge mit Handhabungseinheiten versorgt, die sich in der Querrichtung durch die Regalanordnung bewegen (siehe Fig. 2 der EP' 093 A1). Pro Regalebene wird in jeder Regalgasse jeweils ein weiteres zweites Bahnfahrzeug eingesetzt. Die regalintegrierten Vertikalförderer sind aber teuer. Die Tatsache, dass pro Regalebene immer nur ein einziges Regalbediengerät vorgesehen ist, reduziert die Leistung bzw. Dynamik (Doppelspiele/1000 Stell- bzw. Lagerplätze; Doppelspiel bedeutet eine Einlagerung und eine Auslagerung in eine Regalgasse mittels einer gassenspezifischen Lagermaschine in einem Zyklus).

Die DE 32 21 026 A1 betrifft eine Vorrichtung nach dem Oberbegriff des Anspruchs 1 und ein Verfahren für hohe Ein- und Auslagerungsleistungen von palettierten Gütern in Regallägern.

Alle oben genannten, vorbekannten Ansätze haben das gemeinsame Ziel, ein Lager- und Kommissioniersystem vorzusehen, das die konträren Randbedingungen "Reduktion der Kosten" und "Erhöhung der Leistung" gleichzeitig optimal erfüllt. Jeder dieser vorbekannten Ansätze hat individuelle Vor- und Nachteile. Weil die Randbedingungen konträr sind, gelingt dies diesen Ansätzen mehr und minder gut.

Weiter ist es wünschenswert, den materialflusstechnischen Engpass der (Regalanordnungs-)Vorzone bei der klassischen stirnseitigen Versorgung der Regalgassen zu beseitigen, wobei dennoch gleichzeitig die Dynamik erhöht wird, ohne die Lagerdichte negativ zu beeinträchtigen. Insbesondere soll auf die Verteileinrichtung (Sorter, Fördertechnikkreisel, etc.) in der Vorzone verzichtet werden, die im klassischen Ansatz benötigt wird, um mehrere Arbeitsplätze (Kommissionierplätze) an mehrere Regalgassen anzuschließen, so dass jeder Arbeitsplatz Lagerbehälter von jeder Regalgasse empfangen kann.

Es ist daher eine Aufgabe der vorliegenden Erfindung, ein verbessertes Lager- und Kommisioniersystem vorzusehen, das die konträren Randbedingungen gleichzeitig optimal erfüllt. Insbesondere soll die hohe Lagerdichte (Anzahl Stell- bzw. Lagerplätze/Volumeneinheit), wie sie z.B. bei Regalanordnungen mit einer klassischen stirnseitigen Versorgung der Regalgassen vorliegt, bei gleichzeitigem Verzicht auf die klassische Vorzone (Sorter und Verteilfördertechnik) erhalten bleiben. Vorzugsweise kann jeder Arbeitsplatz direkt aus jeder Regalgasse versorgt werden.

Diese Aufgabe wird durch ein Lager- und Kommissioniersystem zum Auslagern von Handhabungseinheiten gemäß Anspruch 1 gelöst.

Diese Regalanordnung ist hochdynamisch bei äußerst geringen Kosten. Die Dynamik lässt sich generell durch einen Quotient ausdrücken, der aus einer "Anzahl von Ein/Auslagerungen" pro "Stell- bzw. Lagerplatz" gebildet wird. Dieser Quotient ist bei der vorliegenden Erfindung ähnlich hoch wie bei klassischen Shuttle-Anordnungen, bei denen jede Regalgasse stirnseitig mit mindestens einem Vertikalförderer versehen ist, um eine ausreichende Versorgung der Einebenen-Regalbediengeräte (Shuttle) zu gewährleisten, von denen jeweils eines auf jeder Regalebene in jeder Regalgasse vorgesehen ist.

Bei der vorliegenden Erfindung erfolgt eine Auslagerung der Handhabungseinheiten im Wesentlichen quer zu den Regalgassen. Die entsprechenden Bewegungen in der Querrichtung werden von den Regalbediengeräten und den Gassenwechseleinheiten durchgeführt. Lifte, Heber bzw. Vertikalförderer sind lediglich im Außenbereich der Regalanordnung vorgesehen, so dass diese zwecks Wartung frei zugänglich sind. Eine Gesamtanzahl der Vertikalförderer ist im Vergleich zu den herkömmlichen Konzepten geringer, weil weniger Vertikalförderer benötigt werden. Im Inneren der Regalanordnung sind vorzugsweise keine Vertikalförderer vorgesehen.

Eine Lagerdichte der Regalanordnung (Handhabungseinheiten/Volumeneinheit) ist hoch, insbesondere weil wenig Lagerraum durch die Vertikalförderer verbraucht wird. Weder die mittleren Regale noch die Regalgassen werden zum Positionieren der Vertikalförderer benötigt.

Es kommen relativ einfache mechanische Komponenten (Lifte, Shuttle, etc.) zum Einsatz und dennoch lassen sich die Vorzüge eines dreidimensionalen Ein/Auslagerungskonzepts realisieren, bei dem die Vertikalförderer für die vertikalen Bewegungen, die Regalbediengeräte für die horizontalen Bewegungen in der Längsrichtung der Gassen und die Gassenwechseleinheiten (in Kombination mit den Regalbediengeräten beim Ein/Auslagern) für die horizontalen Bewegungen der Handhabungseinheiten in der Querrichtung durch die Regale verantwortlich sind. Dies alles erfolgt während einer optimalen Volumenausnutzung.

Vorzugsweise sind in der ersten Regalgasse mindestens zwei der Regalbediengeräte vorgesehen, die in der Längsrichtung nicht aneinander vorbei fahren können.

Diese Regalbediengeräte stellen sicher, dass im unmittelbaren Bereich der Auslagerungslifte (Vertikalförderer) eine ausreichende Dynamik vorhanden ist. Je näher man den Auslagerungsliften kommt, desto flexibler kann auf Anforderungen (Transportaufträge) reagiert werden, um eine Handhabungseinheit möglichst schnell von einem Ausgangspunkt an einen Zielpunkt zu verbringen. Die Regalbediengeräte sind technisch einfach zu steuern, weil sie vorzugsweise fest definierte Bereiche innerhalb der Regalgasse bedienen. Komplexe Steuervorgänge, wie z.B. die Lastaufnahmemittel während einer Vorbeifahrt auf geeignete Höhen zu verfahren, gibt es nicht. Die Regalbediengeräte können auch bereichsfrei innerhalb der Gasse verfahren, wobei in diesem Fall vorzugsweise Kollisionsvermeidungszonen definiert sind, die im jeweiligen Regalbediengerät verankert sind.

Auch ist es von Vorteil, wenn die mittleren Regale ausschließlich Regalfächer und Gassenwechseleinheiten aufweisen.

So ist die Zugänglichkeit und Wartungsfreundlichkeit der Vertikalförderer sichergestellt, die dann ausschließlich in von außen zugänglichen Bereichen der Regalanordnung positioniert sind.

Die Gassenwechseleinheiten sind in die mittleren Regale integriert.

Die Gassenwechseleinheiten sind dann vom Typ "regalintegriert". Die Handhabungseinheiten durchqueren die mittleren Regale ausschließlich mittels der regalintegrierten Gassenwechseleinheiten. Ein "Durchreichen" der Handhabungseinheiten mittels der Lastaufnahmemittel der Regalbediengeräte wird dann nicht praktiziert. Innerhalb der mittleren Regale können Regalfächer, die einander in der Querrichtung gegenüberliegen, getrennt ausgebildet sein. Einzelregale können Rücken an Rücken zu Doppelregalen aufgebaut werden, die dann wiederum als mittlere Regale eingesetzt werden.

Insbesondere ist jedes der Regalbediengeräte ein Einebenen-Regalbediengerät. In jeder der Regalgassen kann auf jeder Regalebene mindestens eines dieser Einebenen-Regalbediengeräte vorgesehen sein.

Der Einsatz von Shuttle ermöglicht es, äußerst flexibel auf Transportaufträge zu reagieren. In jeder Regalgasse ist auf jeder Regalebene mindestens eines der Regalbediengeräte vorgesehen, so dass sich Wartezeiten reduzieren.

Jedem Vertikalförderer kann ein "eigenes" Regalbediengerät zugeordnet sein, so dass es zu keinen Stauungen im Bereich der Vertikalförderer kommt. Die Vertikalförderer werden unverzüglich mit den Handhabungseinheiten versorgt und müssen nicht warten, bis eines der Regalbediengeräte frei ist, das gerade einen anderen Vertikalförderer in der gleichen Gasse versorgt.

Bei einer besonderen Ausgestaltung weist die Regalanordnung ferner mindestens eine dritte Regalgasse auf, wobei jede der dritten Regalgassen in der Querrichtung zwischen zwei der mittleren Regalen positioniert ist, die in der Querrichtung benachbart und beabstandet zu einander angeordnet sind.

Hier drückt sich die Skalierbarkeit aus. Die dritte Regalgasse vereinfacht eine ABC-Verteilung eines Artikelsortiments über die Regale zusätzlich. Je näher man sich zur Auslagerungsseite befindet, desto höher sollten die Zugriffshäufigkeits-Kategorien der dort gelagerten Handhabungseinheiten sein. Dies bedeutet z.B., dass A-Artikel räumliche nahe zu den Vertikalförderern gelagert werden, wohingegen C-Artikel räumlich weiter weg gelagert sind, insbesondere in der Querrichtung. B-Artikel könnten in den mittleren Bereichen der Regalanordnung gelagert werden.

Generell lässt sich eine ABC-Verteilung der Handhabungseinheiten nach dem oben beschriebenen Muster gut auf die räumliche Struktur der Regalanordnung abbilden.

Weiter ist es von Vorteil, wenn die Regalanordnung ein zweites äußeres Regal aufweist, das in dem anderen der äußeren Bereiche in der Querrichtung gegenüberliegend zum ersten äußeren Regal angeordnet ist und das ein zweites Auslagerungsregal definiert, aus welchem die Handhabungseinheiten bzw. darin enthaltene Artikel die Regalanordnung in der Querrichtung verlassen.

Durch diese Spiegelung der Struktur an einer Längsachse des Systems lässt sich eine Auslagerungskapazität erhöhen, ohne auf die zuvor beschriebenen Vorteile verzichten zu müssen.

Eine Regalbediengerät-Dichte nimmt in einer Auslagerungsrichtung, vorzugsweise stetig, zu.

Dadurch wird eine ausreichende Dynamik gewährleistet, je näher man den Vertikalförderern kommt.

Insbesondere sollte eine Gassenwechseleinheiten-Dichte in einer Auslagerungsrichtung, vorzugsweise stetig, zunehmen.

Auch ist es auch möglich, dass die Regalfächer sowie die Lastaufnahmemittel der Regalbediengeräte zur mehrfachtiefen Lagerung der Handhabungseinheiten eingerichtet sind.

Bei einer besonderen Ausgestaltung weist das System ferner eine Steuereinrichtung auf, die einen Materialfluss von auszulagernden Handhabungseinheiten so steuert, dass auszulagernde Handhabungseinheiten im Wesentlichen entlang der Querrichtung durch die Regalanordnung zu einer der Auslagerungsschnittstellen bewegt werden, indem: eine auszulagernde Handhabungseinheit von einem der Regalbediengeräte aus einem der Regalfächer ausgelagert wird und anschließend an eine der Gassenwechseleinheiten oder an einen der Vertikalförderer abgegeben wird; die abgegebene Handhabungseinheit von der einen der Gassenwechseleinheiten durch das entsprechende mittlere Regal bewegt wird, um von einem anderen der Regalbediengeräte abgeholt und an einen der Vertikalförderer oder an eine andere der Gassenwechseleinheiten in einem anderen der mittleren Regale abgegeben zu werden; und der eine der Vertikalförderer die abgegebene Handhabungseinheit vertikal zu seiner Auslagerungsschnittstelle fördert; und dass die auszulagernden Handhabungseinheitenim Wesentlichen in der Querrichtung durch die Regalanordnung bewegt werden, um die Regalanordnung über die Auslagerungsregale zu verlassen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Strukturdiagramm eines Lager- und Kommissioniersystems der Erfindung;
- Fig. 2: eine Draufsicht auf einen exemplarischen Bereich, wo das System positioniert wird;
- Fig. 3: eine Draufsicht auf den Bereich der Fig. 2 inklusive entsprechender Komponenten und Elemente des Systems;
- Fig. 4: eine Schnittansicht entlang der Linie IV-IV in Fig. 3;
- Fig. 5: eine Draufsicht auf eine weitere Ausführungsform des Systems (Fig. 5A) und eine Verdeutlichung verschiedener Dichten (Fig. 5B) für das System der 5A;
- Fig. 6: eine Draufsicht auf eine noch weitere Ausführungsform des Systems (Fig. 6A) sowie eine entsprechende Dichteverteilung (Fig. 6B); und
- Fig. 7: eine schematische Übersicht über die Effizienz verschiedener Lagermaschinen bzw. Regalbediengeräte in einem Kleinteilelager.

In der nachfolgenden Beschreibung werden ähnliche Elemente, Komponenten, Teile und Merkmale mit ähnlichen Bezugszeichen versehen, wobei die diesbezüglichen Offenbarungen sinngemäß auf die sich ähnlichen Elemente, Komponenten, Teile und Merkmale mit den ähnlichen Bezugszeichen übertragen werden können. Lage- bzw. Positionsangaben, wie z.B. "oben", "unten", "seitlich", "vertikal", "horizontal", "außen", "innen", "mittlere", "längs", "quer" und dergleichen, sind auf die unmittelbar beschriebene(n) Figur(en) bezogen und bei einer Lage- bzw. Positionsänderung sinngemäß auf die neue Lage bzw. Position zu übertragen.

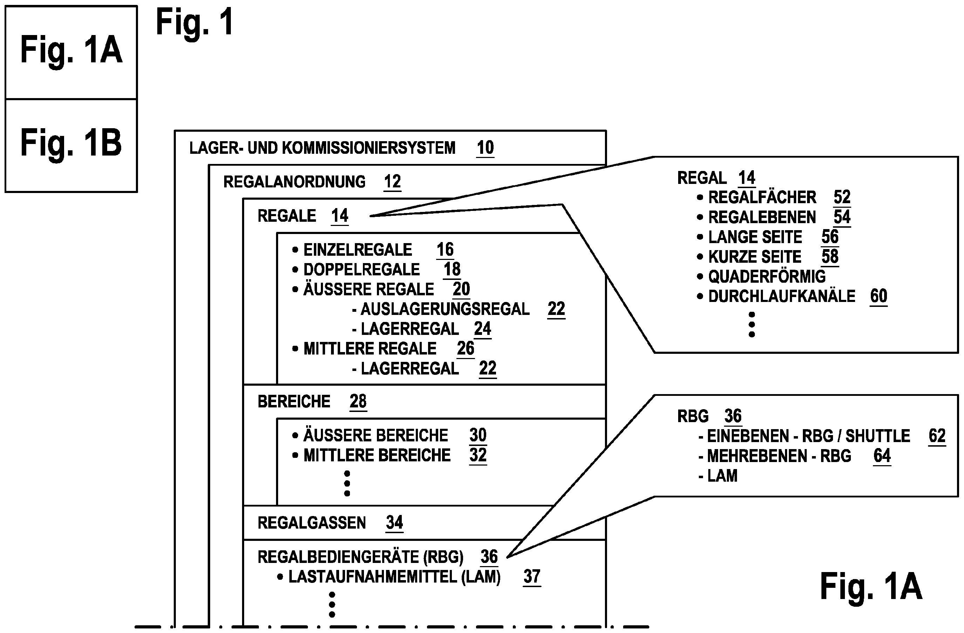

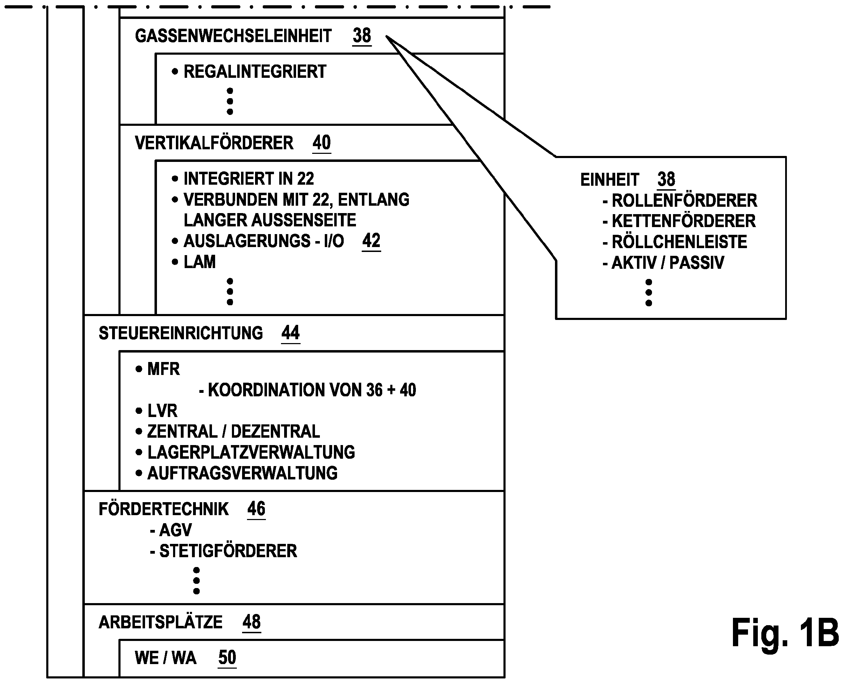

Ferner ist zu beachten, dass Richtungsangaben und Orientierungen zugrunde gelegt werden, die sich an die in der (Intra-)Logistik grundsätzlich üblichen Bezeichnungen halten. Folglich werden eine Längsrichtung mit "X", eine Querrichtung mit "Z" und eine Höhenrichtung mit "Y" bezeichnet. Exemplarisch kann der Fig. 1 ein damit korrespondierendes (z.B. kartesisches) Koordinatensystem XYZ entnommen werden.

Nachfolgend werden zu kommissionierende Güter (d.h. Artikel, Waren, Gebinde, Stückgüter, etc.) üblicherweise in Form von sog. (Lager-)Bestandseinheiten ("SKU", Storage Keeping Unit) in einem Lager bevorratet. Diese Bestandseinheiten werden nachfolgend auch als "Handhabungseinheiten 66" bezeichnet werden, die mit oder ohne Ladungsträger (Behälter, Tablar, Karton, etc.) gehandhabt werden.

Fig. 1 zeigt eine nicht abschließende Übersicht der Komponenten und Elemente, aus denen ein Lager- und Kommissioniersystem (nachfolgend kurz auch als "System" bezeichnet) 10 aufgebaut sein kann.

Ein Kernelement des Systems 10 stellt eine Regalanordnung 12 dar. Die Regalanordnung 12 weist Regale 14 auf, die exemplarisch als Einzelregale 16, Doppelregale 18, äußere Regale 20 und mittlere Regale 26 ausgeprägt sein können. Die äußeren Regale 20 können Auslagerungsregale 22 und/oder Lagerregale 24 darstellen. Die mittleren Regale 26 stellen üblicherweise nur Lagerregale 24 dar, werden also nur zu Lagerzwecken benutzt. Die Regale 14 sind alle exemplarisch entlang einer Längsrichtung X des Systems ausgerichtet, wie es z.B. in der Fig. 2 gezeigt ist. Dies bedeutet, dass eine Länge der Regale parallel zu Längsrichtung X verläuft und eine Breite der Regale 14 parallel zur Querrichtung Z verläuft, während sich die Regale 14 parallel zur vertikalen Richtung Y in die Höhe erstrecken. Es versteht sich, dass die Regale 14 auch entlang der Querrichtung Z oder entlang einer anderen, beliebigen Richtung orientiert sein könnten.

Die Regalanordnung 12 umfasst ferner klar definierte Bereiche 28 (Flächen bzw. Räume), in denen die Regale 14 angeordnet bzw. positioniert sind und die funktional von anderen Bereichen (z.B. vom Kommissionierbereich, Versandbereich, etc.) getrennt angeordnet sind. Es gibt einen oder mehrere äußere Bereiche 30 sowie einen oder mehrere mittlere Bereiche 32, wo die Regal 14 positioniert sind.

Außerdem umfasst die Regalanordnung 12 Regalgassen 34, die zwischen den Regalen 14 angeordnet und definiert sind. In den Regalgassen 34 sind Regalbediengeräte (RBG) 36 vorgesehen. Die Regalgassen 34 erstrecken sich parallel zu den Regalen 14, also parallel zur Längsrichtung X. Die Regalgassen 34 sind zwischen solchen Regalen 14 definiert, die in der Querrichtung Z beabstandet zueinander angeordnet sind und somit einander nicht berühren bzw. nicht Rücken an Rücken zueinander stehen.

Die Regalbediengeräte 36 sind beweglich. Die Regalbediengeräte 36 sind mit einem (hier nicht näher beschriebenen und gezeigten Antrieb ausgestattet, um sich im Wesentlichen in der Längsrichtung X innerhalb der Regalgassen 34 bewegen zu können. Die Regalbediengeräte 36 sind ferner jeweils mit einem Lastaufnahmemittel (LAM) 37 ausgestattet, um Güter (z.B. die Handhabungseinheiten 66) im Wesentlichen in der Querrichtung Z zu transferieren bzw. umzusetzen. Ein solcher Transfer in der Z-Richtung findet zwischen den RBG 36, den Regalen 14 und den Vertikalförderern 40 statt, die nachfolgend noch näher beschrieben werden. Die LAM 37 können ggf. während eines Transfers der Güter in der Querrichtung Z auch einen Hub in der Höhenrichtung Y durchführen. Üblicherweise verfügt das entsprechende Regalbediengerät 36 dann über einen Mast oder Ähnliches, entlang dem das LAM 37 vertikal beweglich ist. Dies hängt vom Typ des LAM 37 ab. Generell führt das LAM 37 jedoch im Wesentlichen einen Transfer der Güter in der Querrichtung Z durch. Einebenen-RBG bzw. Shuttle 62, die bevorzugt eingesetzt werden, führen die Transfers ausschließlich in der Querrichtung Z durch.

Schließlich umfasst die Regalanordnung 12 mindestens eine Gassenwechseleinheit 38, wobei die Gassenwechseleinheiten regalintegriert ausgebildet sind. Mit den Gassenwechseleinheiten 38 werden die Handhabungseinheiten 66 zwischen benachbarten Regalgassen 34 ausgetauscht, wie es nachfolgend noch näher beschrieben werden wird. Eine Gassenwechseleinheit 38 ist eine mechanische Einheit, die es den Handhabungseinheiten 66 ermöglicht, von einer der Regalgassen 34 (durch ein entsprechendes Regal 14) in eine unmittelbar benachbarte Regalgasse 34 zu gelangen, um dort von einem (anderen) Regalbediengerät 36 gehandhabt zu werden.

Regalintegrierte Gassenwechseleinheiten 38 sind fest in die Regale 14 eingebaut, so dass Güter in der Querrichtung Z durch das entsprechende Regal 14 hindurch bewegt werden können. Die Gassenwechseleinheiten 38 können durch Rollenförderer, Kettenförderer, Riemenförderer, Bandförderer oder Ähnliches implementiert werden. Die Gassenwechseleinheiten 38 können aktiv (z.B. inkl. Antrieb) oder passiv (ohne Antrieb, z.B. Schwerkraftbahn) betrieben werden.

Ferner umfasst die Regalanordnung 12 Vertikalförderer bzw. Lifte 40. Die Vertikalförderer 40 sind stationär angeordnet und befördern die Güter im Wesentlichen in der vertikalen Richtung Y, wenn man von einem Austausch der Güter mit einem der RBG 36 bzw. deren LAM 37. Dieser Austausch erfolgt üblicherweise wiederum im Wesentlichen in der Querrichtung Z.

Die Vertikalförderer 40 sind den Auslagerungsregalen 22 zugeordnet und in deren unmittelbarer Nähe positioniert, indem die Vertikalförderer 40 entweder in die Auslagerungsregale 22 integriert sind, d.h. regalintegriert ausgebildet sind, oder indem sie regalextern positioniert und dann aber mit dem entsprechenden Auslagerungsregal 22 (physisch und materialflusstechnisch) verbunden sind. Die regalexternen Vertikalförderer 40 sind in diesem Fall entlang von langen (Außen-)Seiten 56 der Auslagerungsregale 22 positioniert und über Fördereinrichtungen mit dem Auslagerungsregal 22 verbunden.

Jeder der Vertikalförderer 40 weisen mindestens eine Auslagerungsschnittstelle 42 in einer vorgegebenen Höhe auf.

Das System 10 kann ferner eine Steuereinrichtung 44, weitere (regalanordnungsexterne) Fördereinrichtungen 46, Arbeitsplätze 48, einen Wareneingang (WE)/Warenausgang (WA) 50 und andere Funktionseinheiten aufweisen, die üblicherweise in herkömmlichen Lager- und Kommissioniersystemen vorgesehen sind. Eine Kommunikation zwischen den verschiedenen Elementen und Komponenten erfolgt über Bussysteme und/oder drahtlos.

Die Steuereinrichtung 44 kann mehrere Funktionen übernehmen, wie z.B. die eines Materialflussrechners (MFR), eines Lagerverwaltungsrechners (LFR), einer Lagerplatzverwaltung, einer Auftragsverwaltung und Ähnliches. Die Steuereinrichtung 44 kann zentral und/oder dezentral implementiert sein. Die Steuereinrichtung 44 sorgt dafür, dass auszulagernde Handhabungseinheiten 66 im Wesentlichen in der Querrichtung Z durch die Regalanordnung 12 bewegt werden, um die Regalanordnung 12 über die Auslagerungsschnittstellen 42 (in der Querrichtung, also nicht über die kurzen Stirnseiten) zu verlassen.

Die Fördertechnik bzw. -einrichtung 46 kann durch Stetigförderer, autonom verfahrbare Fahrzeuge bzw. fahrerlose Transportsysteme oder Ähnliches realisiert sein.

Die Arbeitsplätze 48 können Packstationen, Palletierstationen, Depalletierstationen und Ähnliches umfassen. Der Warenausgang 50 kann eine Versandstation umfassen.

Jedes der Regale 14 weist eine Vielzahl von Regalfächern 52 auf, die in der Längsrichtung X nebeneinander und in der Höhenrichtung Y übereinander in Regalebenen angeordnet sind. Die Fächer 52 erstrecken sich in ihrer Tiefe parallel zur Querrichtung Z. Die Fächer 56 können für ein einfachtiefe oder für eine mehrfachtiefe Lagerung der Handhabungseinheiten 66 eingerichtet sein.

Die Regale 14 sind üblicherweise quaderförmig mit zwei sich gegenüberliegenden langen Seiten 56 und zwei sich gegenüberliegenden kurze (Stirn-)Seiten 58 ausgebildet. Die langen Seiten 56 sind üblicherweise parallel zur Längsrichtung X ausgerichtet. Die kurzen Seiten 58 sind üblicherweise parallel zur Querrichtung Y ausgerichtet. Die Regale 14 können ferner Durchlaufkanäle 60 aufweisen, die dann wiederum entlang der Querrichtung Z orientiert sind.

Die RBG 36 können in Form von Einebenen-Regalbediengeräten 62 oder in Form von Mehrebenen-Regalbediengeräten 64 implementiert sein. Einebenen-RBG 62 werden auch als "Shuttle" bezeichnet. Einebenen-RBG 62 und Mehrebenen-RBG 64 unterscheiden sich darin, dass das jeweilige RBG 36 entweder nur eine einzige Regalebene 54 oder mehrere übereinander geordnete Regalebenen 54 bedienen kann.

Fig. 2 zeigt eine Draufsicht auf eine Gesamtfläche bzw. einen (Gesamt-)Bereich 28, in welchem die Regalanordnung 12 positionierbar ist. Der Bereich 28 ist in der Fig. 2 mit einer Strichlinie umrandet. Der Bereich 28 ist entlang der Querrichtung Z exemplarisch in einen ersten, sich in der Längsrichtung erstreckenden äußeren Bereich 30-1, einen mittleren Bereich 32 und einen zweiten äußeren Bereich 30-2 aufgeteilt. Die Aufteilung könnte auch entlang der Längsrichtung X oder einer anderen beliebigen Richtung erfolgen. Der äußere Bereich 30 könnte den mittleren bzw. inneren Bereich 32 vollständig umschließen.

Fig. 3 zeigt eine Draufsicht auf den Bereich 28 der Fig. 2 einschließlich weiterer Komponenten der Regalanordnung 12, nämlich inkl. der Regale 14, der Regalgassen 34, der Regalbediengeräte 36, der Vertikalförderer 40 und einer (einzigen) Gassenwechseleinheit 38. Im ersten äußeren Bereich 30-1 ist z.B. ein Einzelregal 16 angeordnet. Dieses Einzelregal 16 stellt in diesem Fall das einzige äußere Regal 20 der Regalanordnung 12 dar. Dieses Einzelregal 16 stellt funktional somit auch das einzige Auslagerungsregal 22 dar, weil nur äußere Regale 16 Auslagerungsregale 22 sein können. Die Handhabungseinheiten 66, die in den Regalfächern 52 bevorratet sind, werden materialflusstechnisch mittels der RBG 36 und ggf. der Gassenwechseleinheit 38 zu den Vertikalförderern 40-1 und/oder 40-2 bewegt, um die Regalanordnung 12 in der Querrichtung Z zu verlassen, wie es durch Pfeile 68 angedeutet ist. Das Auslagerungsregal 22 zeichnet sich generell durch seine Vertikalförderer 40 aus, die die mittleren Regale 26 üblicherweise nicht ausweisen.

Die Vertikalförderer 40-1 und 40-2 sind hier exemplarisch in das Auslagerungsregal 22 integriert. Die Vertikalförderer 40-1 und 40-2 sind z.B. in einen (nicht näher gezeigten) Regalbau fest eingebaut, um die Handhabungseinheiten 66 im Wesentlichen in der vertikalen Richtung Y (d.h. senkrecht zur Zeichnungsebene) zu transportieren. Es versteht sich, dass die Vertikalförderer 40 mit entsprechenden Lastaufnahmemitteln ausgestattet sind, die hier nicht näher gezeigt und beschrieben sind. Diese Lastaufnahmemittel sind vorzugsweise eingerichtet, die Handhabungseinheiten 66 aktiv mit den RBG 36 in der Querrichtung Z auszutauschen, insbesondere während Einlagerungsphasen. Diese LAM sind vorzugsweise auch für einen Hubs in der vertikalen Richtung Y eingerichtet.

Generell gilt, dass die jedem Auslagerungsregal 22 mehrere Vertikalförderer 40 zugeordnet sind, indem die entsprechenden Vertikalförderer 40 entlang der langen Seite 56 des Auslagerungsregals 22 verteilt angeordnet sind. Die Vertikalförderer 40 können in der Längsrichtung X auch direkt nebeneinander positioniert sein können. Die Vertikalförderer 40 sind in der Fig. 3 direkt in das Auslagerungsregal 22 integriert. Alternativ und ergänzend können die Vertikalförderer 40 auch von außen an die lange Seite 56 des Auslagerungsregals 22 gekoppelt werden, indem sie z.B. von außen an dem Auslagerungsregal 22 befestigt werden (in Fig. 3nicht gezeigt).

Eine erste Regalgasse 34-1 ist zwischen dem Auslagerungsregal 22 und einem mittleren Regal 26 definiert. Das mittlere Regal 26 stellt ein Doppelregal 18 dar, das man z.B. erhält, indem man zwei Einzelregale 16 Rücken an Rücken positioniert. Die erste Regalgasse 34-1 ist in der Querrichtung Z zwischen dem mittleren Regal 26 und dem Auslagerungsregal 22 der Fig. 3 angeordnet.

Eine zweite Regalgasse 34-2 ist auf einer gegenüberliegenden Seite des mittleren Regals 26 angeordnet, die der Seite des mittleren Regals 26 gegenüberliegt, an welche die erste Regalgasse 34-1 direkt angrenzt. Die erste und zweite Regalgasse 34-1 und 34-2 sind direkt benachbarte Regalgassen 34.

In der ersten Regalgasse 34-1 sind exemplarisch zwei RBG 36 vorgesehen. Es könnten noch mehr RBG 36 dort vorgesehen sein. In der Fig. 3 sind z.B. ein erstes Einebenen-RBG 62-1 und ein zweites Einebenen-RBG 62-2 vorgesehen, die gleichzeitig in der ersten Regalgasse 34-1 betrieben werden. Die Einebenen-RBG 62-1 und 62-2 sind üblicherweise so ausgebildet, dass sie nicht in der Längsrichtung X aneinander vorbeifahren können. Es versteht, dass, wenn in der ersten Regalgasse 34-1 Einebenen-Regalbediengeräte 62 eingesetzt werden, auf jeder Regalebene 54 (nicht dargestellt) jeweils mehrere Einebenen-Regalbediengeräte 62 vorgesehen sind, da die Einebenen-Regalbediengeräte selbst über keinen Hub verfügen.

In der zweiten Regalgasse 34-2 ist ein weiteres RBG 36 vorgesehen. In der Fig. 3 ist exemplarisch ein (einziges) Mehrebenen-RBG 64 vorgesehen, das alle Regalebenen 54 des mittleren Regals 26 der Fig. 3 in der Höhenrichtung Y erreichen kann. In der zweiten Regalgasse 34-2 ist also insgesamt nur ein einziges RBG 36 vorgesehen, wohingegen in der ersten Regalgasse 34-1 mindestens zehn Einebenen-RBG 62 vorgesehen sind, wenn das Auslagerungsregal 22 und das mittlere Regal 26 z.B. jeweils fünf (vertikal gleich beabstandete) Regalebenen 54 aufweist.

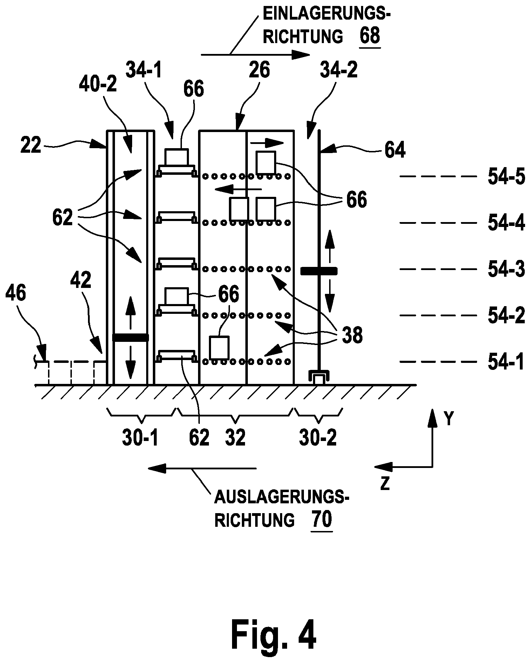

Das mittlere Regal 26 der Fig. 3 ist mit mindestens einer Gassenwechseleinheit 38 (pro Regalebene 54) ausgestattet, die (beim Auslagern) einen Austausch der Handhabungseinheiten 66 in der Querrichtung Z durch das mittlere Regal 26 zwischen dem RBG 64 der zweiten Regalgasse 34-2 und den RBG 62 der ersten Regalgasse 34-1 ermöglicht. Im Beispiel der Fig. 3 ist auf jeder der (nicht dargestellten) Regalebenen 54 eine Gassenwechseleinheit 38 vorgesehen, weil in der ersten Regalgasse 34-1 Regalbediengeräte 36 des Typs Einebenen-Regalbediengerät 62 eingesetzt werden. So ist sichergestellt, dass jedes der Einebenen-Regalbediengeräte 62 in der ersten Regalgasse 34-1 Handhabungseinheiten 66 vom Regalbediengerät 64 aus der zweiten Regalgasse 34-2 empfangen (und später auf die Vertikalförderer 40 verteilen) kann. Die Struktur der Regalanordnung 12 der Fig. 3 in der vertikalen Richtung Y wird nachfolgend unter Bezugnahme auf Fig. 4 noch näher erläutert werden.

Die Gassenwechseleinheiten 38 sind vorzugsweise aktive Einheiten 38, d.h. die Gassenwechseleinheiten 38 sind angetrieben, um die Handhabungseinheiten 66 automatisiert in der Längsrichtung X zwischen den benachbarten Regalgassen 34-1 und 34-2 austauschen zu können. Es versteht sich, dass die Gassenwechseleinheiten 38 auch passiv ausgebildet sein können, wie z.B. durch eine nicht angetriebene (nicht dargestellte) Röllchenleiste, wo die Bewegung der Handhabungseinheiten 66 durch das Regal 26 hindurch dann mittels eines Impulses durch die RBG 36 oder mittels Schwerkraft erfolgen sollte.

Die Gassenwechseleinheiten 38 erstrecken sich (in der Querrichtung Z) vorzugsweise über eine gesamte Breite des entsprechenden mittleren Regals 26, wohingegen die Regalfächer 52 des mittleren Regals 26 der Fig. 3, die sich in der Querrichtung Z direkt gegenüberliegen, exemplarisch physisch getrennt voneinander ausgebildet sind, so dass ein Durchreichen der Handhabungseinheiten 66 in der Querrichtung Z ausschließlich bei den Gassenwechseleinheiten 38 erfolgen kann. Es versteht sich, dass, abhängig von der Ausführung der Regale 14, die Regalbediengeräte 36 die Funktion der Gassenwechseleinheiten 38 übernehmen können, wenn die LAM 37 der RBG 36 entsprechend ausgebildet sind. Dies bedeutet, dass die LAM 37 der RBG 36 dann so eingerichtet sind, dass die Handhabungseinheiten 66 von einer der Seiten 56 des mittleren Regals 26 durch das Regal 26 hindurch zu der in der Querrichtung Z gegenüberliegenden Seite 56 bewegt werden können.

Fig. 4 zeigt eine seitliche Schnittansicht der Regalanordnung 12 der Fig. 3 entlang der Linie IV-IV in Fig. 3. Der Schnitt verläuft sowohl durch das mittlere Regal 26 in Höhe der Gassenwechseleinheiten 38 als auch durch das Auslagerungsregal 22 in Höhe des Vertikalförderers 40-2. Die Fig. 4 wird von links nach rechts beschrieben werden.

Im ersten äußeren Bereich 30-1 ist das Auslagerungsregal 22 positioniert, das die regalintegrierten Vertikalförderer 40 aufweist, von denen in der Fig. 4 der Vertikalförderer 40-2 zu sehen ist. Der Vertikalförderer 40-2 umfasst ein nicht näher bezeichnetes Lastaufnahmemittel, welches entlang von nicht näher bezeichneten regalintegrierten Führungen in der vertikalen Richtung Y innerhalb des Auslagerungsregals 22 aufwärts und abwärts bewegbar ist, wie es durch dunkle kleine Pfeile angedeutet ist. Das Lastaufnahmemittel des Vertikalförderers 40-2 ist üblicherweise zusätzlich mit einer Fördereinheit ausgestattet, die in der Fig. 4 nicht näher gezeigt und bezeichnet ist, um die Handhabungseinheiten 66, die sie von den Shuttle 62 in der horizontalen Querrichtung Z übergeben bekommt, an der Auslagerungsschnittstelle 42 aktiv in der horizontalen Richtung Z an eine (externe) Fördertechnik 46 abzugeben, die in der Fig. 4 mit einer Strichlinie auf einem Bodenniveau angedeutet ist und die in diesem Fall nicht zur Regalanordnung 12 gehört. Die Auslagerungsschnittstelle 42 ist also z.B. auf der Höhe einer ersten (untersten) Regalebene 54-1 definiert. Es versteht sich, dass die Auslagerungsschnittstelle 42 in jeder beliebigen Höhe definiert werden kann. Ferner versteht es sich, dass jeder der Vertikalförderer 40 auch mehrere übereinander angeordnete Auslagerungsschnittstellen 42 (inkl. zugehöriger Fördertechniken 46) aufweisen kann.

Da die Regalbediengeräte 36 in der ersten Regalgasse 34-1, die den ersten äußeren Bereich 30-1 und den mittleren Bereich 32 überlappt, durch Einebenen-RBG bzw. Shuttle 62 implementiert sind, sind auf jeder der hier exemplarisch gezeigten fünf Regalebenen 54-1 bis 54-5 Shuttle 62 angeordnet. Jedes der Shuttle 62 weist ein Lastaufnahmemittel 37 auf, das eingerichtet ist, die Handhabungseinheiten 66 aus den Regalen 14 bzw. den Gassenwechseleinheiten 38 abzuholen und an die Vertikalförderer 40 (oder andere Regalfächer 52 in den Regalen 22 und 26) abzugeben.

Das mittlere Regal 26 ist im mittleren Bereich 32 angeordnet. In der Fig. 4 sind fünf Gassenwechseleinheiten 38 gezeigt, die vertikal übereinander in Höhe der Regalebenen 54 angeordnet sind und die hier exemplarisch in Form von nicht näher bezeichneten Rollenförderern implementiert sind. Auf jeder der Regalebenen 54-1 bis 54-5 ist jeweils eine Gassenwechseleinheit 38 vorgesehen. Jede der Gassenwechseleinheiten 38 erstreckt sich vorzugsweise über eine vollständige Breite des mittleren Regals 26 in der Querrichtung Z. Die Gassenwechseleinheiten 38 können aber kürzer sein, so dass sie nur in einem inneren Kernbereich der eigentlichen Regalfächer 52 vorgesehen sind. In diesem Fall können den Gassenwechseleinheiten 38 "normale" Regalfächer 52 vorgelagert sein.

In der Fig. 3 sind die Gassenwechseleinheiten 38 aktiv, d.h. angetrieben, ausgebildet, um eine oder mehrere der Handhabungseinheiten 66 selbsttätig in der horizontalen Querrichtung Z nach links oder nach rechts zu bewegen. Auf der vierten Regalebene 54-2 sind z.B. zwei Handhabungseinheiten 66 gezeigt, die von der zweiten Regalgasse 34-2 in Richtung der ersten Regalgasse 34-1 bewegt werden, wie es durch einen dunklen Pfeil angedeutet ist, um dort von dem entsprechenden Shuttle 62 abgeholt und später an einen der Vertikalförderer 40 abgegeben zu werden. Alternativ können die Handhabungseinheiten 66 von diesem Shuttle 62 natürlich auch an ein (hier nicht dargestelltes) Regalfach 52 des Auslagerungsregals 22 abgegeben werden, indem das Shuttle 62 auf hier nicht näher bezeichneten regalseitig montierten Schienen horizontal in der Längsrichtung X (d.h. senkrecht zur Zeichnungsebene der Fig. 4) zum entsprechenden Regalfach 52 fahren und anschließend die Handhabungseinheit 66 an dieses Regalfach 52 in der Querrichtung Z abgegeben. Das Auslagerungsregal 22 dient in diesen Fällen als Pufferregal, z.B. wenn der entsprechende Vertikalförderer 40 noch nicht bereit ist, die Handhabungseinheit 66 aufzunehmen, weil der entsprechende Vertikalförderer 40 noch mit einem anderen Transportauftrag beschäftigt ist.

Die Gassenwechseleinheiten 38 können aber auch eingesetzt werden, um die Handhabungseinheiten 66 einzulagern oder umzulagern. In diesem Fall werden die Gassenwechseleinheiten 38 in einer umgekehrten Richtung betrieben. In der Fig. 4 wird auf der fünften Regalebene 54-5 z.B. eine einzige Handhabungseinheit 66 entlang einer Einlagerungsrichtung 68 von der ersten Regalgasse 34-1 durch das mittlere Regal 26 zur zweiten Regalgasse 34-2 bewegt, wie es durch einen kleinen dunklen Pfeil in der Regalebene 54-5 angedeutet ist. Von dort kann diese Handhabungseinheit 66 vom Mehrebenen-RBG 64 abgeholt werden, indem dessen Lastaufnahmemittel auf die Höhe der fünften Regalebene 54-5 verfahren wird, um diese Handhabungseinheit 66 aufzunehmen und an eines der (hier nicht gezeigten) Regalfächer 52 des mittleren Regals 26 zu verbringen. Das Mehrebenen-Regalbediengerät 64 ist exemplarisch (bodenseitig) schienengeführt und weist einen hier nicht näher bezeichneten Mast auf, entlang dem sich das nicht näher bezeichnete Lastaufnahmemittel in der vertikalen Richtung Y aufwärts und abwärts bewegen kann. Ferner versteht es sich wiederum, dass auch das Lastaufnahmemittel des RBG 64 angetrieben sein kann, um die Handhabungseinheiten 66 in der horizontalen Querrichtung Z aktiv zu bewegen. Das RBG 64 selbst ist horizontal in der Längsrichtung X durch die zweite Regalgasse 34-2 verfahrbar.

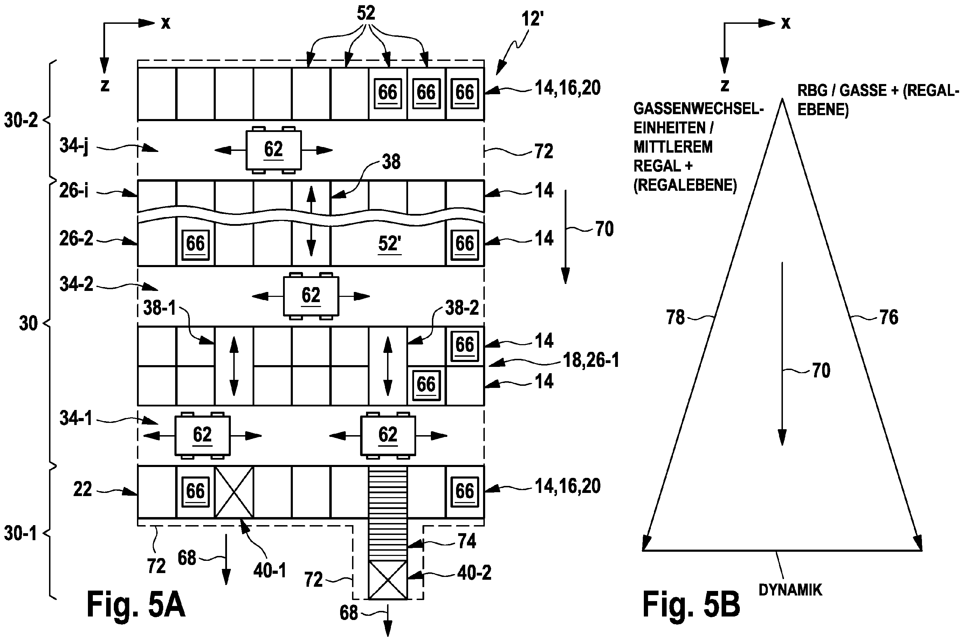

Ferner versteht es sich, dass das Mehrebenen-RBG 64 generell durch jeden anderen Typ eines RBG 36 ausgetauscht werden kann. So kann das Mehrebenen-RBG 64 der Fig. 3 und 4 z.B. durch fünf vertikal übereinander angeordneten Einebenen-RBG 62 ersetzt werden, wie es bereits für die erste Regalgasse 34-1 gezeigt ist. Diese Ersetzung ist insbesondere dann angezeigt, wenn sich rechts neben dem in der Figur gezeigten mittleren Regal 26 weitere (nicht gezeigte) mittlere Regale 26 erstrecken, wie es unter Bezug auf Fig. 5 noch näher beschrieben werden wird.

Ferner versteht es sich, dass auch die Einebenen-RBG 62 in der ersten Regalgasse 34-1 durch andere Typen von RBG 36 ersetzt werden können. Dies hat wiederum Einfluss auf die vertikale Verteilung, und somit auf die Anzahl, der Gassenwechseleinheiten 38 im jeweiligen mittleren Regal 26. Die Gassenwechseleinheiten 38 sind in der vertikalen Richtung Y so zu verteilen, dass jedes der RBG 36 in direkt angrenzenden Regalgassen (hier 34-1 und 34-2) die Möglichkeit hat, Handhabungseinheiten 66 vom jeweils anderen RBG 36 aus der anderen Regalgasse 34 zu empfangen.

Es ist jedoch besonders bevorzugt, wenn innerhalb der Regalanordnung 12 ausschließlich Einebenen-RBG 62 eingesetzt werden. In diesem Fall ist auf jeder Regalebene 54 der mittleren Regale 26 mindestens jeweils eine Gassenwechseleinheit 38 vorgesehen.

Die Figuren 5A und 5B dienen einer grafischen Verdeutlichung verschiedener Dichten, insbesondere einer Regalbediengerät-Dichte 76 und einer Gassenwechseleinheiten-Dichte 78. Fig. 5A zeigt eine Draufsicht auf eine weitere Ausführungsform einer Regalanordnung 12', die ähnlich wie die Regalanordnung 12 der Figuren 3 und 4 aufgebaut ist, jedoch größer ist. Die Fig. 5B zeigt eine grafische Verdeutlichung der verschiedenen Dichten 76 und 78 für die Fig. 5A.

In der Regalanordnung 12' der Fig. 5A erfolgt die Auslagerung bzw. Bewegung der Handhabungseinheiten 66 wiederum exemplarisch ausschließlich von oben nach unten (vgl. Orientierung des Pfeils für die Auslagerungsrichtung 70), d.h. im Wesentlichen entlang der Querrichtung Z, weil lediglich im unteren äußeren Bereich 30-1 ein (einziges) Auslagerungsregal 22 vorgesehen ist. Das äußere Regal 20 im oberen äußeren Bereich 30-2 wird nicht als Auslagerungsregal 22, sondern nur als Lagerregal 24 benutzt, so dass dort auch keine Vertikalförderer 40 vorgesehen sind. Das Auslagerungsregal 22 im unteren äußeren Bereich 30-1 weist exemplarisch zwei Vertikalförderer 40-1 und 40-2 auf, wobei der Vertikalförderer 40-1 regalintegriert ausgebildet ist und der Vertikalförderer 40-2 außerhalb des Auslagerungsregals 22, also regalextern, aber noch immer innerhalb des äußeren Bereichs 30-1 positioniert ist, wie durch den Verlauf einer Strichlinie 72 angedeutet, die den äußeren Rand der Regalanordnung 12' verkörpert. Der regalexterne Vertikalförderer 40-2 ist (horizontal quer) über eine Fördereinrichtung 74 (hier z.B. einen Rollenförderer) mit dem Auslagerungsregal 22 (physisch und materialflusstechnisch) verbunden. Es versteht sich, dass die Fördereinrichtung 74 auf jeder Regalebene 54 des Auslagerungsregals 22 vorgesehen ist, insbesondere dann wenn in der ersten Regalgasse 34-1 ausschließlich Einebenen-RBG 62 verwendet werden. Ferner versteht es sich, dass die Handhabungseinheiten 66 den regalexternen Vertikalförderer 40-2 nicht nur in der Querrichtung Z (siehe Pfeil 68), sondern alternativ und/oder ergänzend auch in der Längsrichtung X verlassen könnten. Das Gleiche gilt generell für die Vertikalförderer 40, auch für den regalintegrierten Vertikalförderer 40-1 in Fig. 5A, indem z.B. eine regalintegrierte Fördertechnik zur Stirnseite der Regalanordnung 12' geführt wird. In welcher Richtung die Handhabungseinheiten 66 die Vertikalförderer 40 tatsächlich verlassen, ist beliebig wählbar. Der Materialfluss innerhalb der Regalanordnung 12 erfolgt aber generell im Wesentlichen entlang der Querrrichtung Z.

Die Regalanordnung 12' der Fig. 5A weist mehrere mittlere Regale 26 auf. In der Fig. 5A ist ein erstes mittleres Regal 26-1, ein zweites mittleres Regal 26-2 sowie ein weiteres mittleres Regal 26-i gezeigt, wobei der Index "i" jede beliebige Zahl annehmen kann, die größer als 2 ist. Ferner sind in der Fig. 5A eine erste Regalgasse 34-1, eine zweite Regalgasse 34-2 sowie eine i-te Regalgasse 34-j (j=i+1) gezeigt. In den Regalgassen 34 der Fig. 5A werden exemplarisch nur Einebenen-Regalbediengeräte 62 eingesetzt. Dies bedeutet, dass in jeder Regalgasse 34 auf jeder der entsprechenden Regalebenen 54 (nicht dargestellt) Einebenen-Regalbediengeräte 62 vorgesehen sind. So ist sichergestellt, dass jedes Regalfach 52 auf jeder Regalebene 54 bedient werden kann. Es versteht sich, dass die Regalfächer 52 unterschiedlich dimensioniert sein können, wie es exemplarisch für das breitere Regalfach 52' im zweiten mittleren Regal 26-2 angedeutet ist.

Generell gilt, dass sowohl die Regalbediengeräte-Dichte 76 als auch die Gassenwechseleinheiten-Dichte 78 in der Auslagerungsrichtung 70 (vorzugsweise stetig) zunimmt, wie es in der Grafik der Fig. 5B angedeutet ist. Dies bedeutet mit anderen Worten, dass immer mehr Regalbediengeräte 36 pro Regalgasse 34, und abhängig vom verwendeten Typen der Regalbediengeräte 36 auch pro Regalebene 54, eingesetzt werden, je näher man zum Auslagerungsregal 22 kommt. Das Gleiche gilt für die Gassenwechseleinheiten 38, was sich durch die Gassenwechseleinheiten-Dichte 78 ausdrückt.

In der Regalanordnung 5A sind in der ersten Regalgasse 34-1 mehr Einebenen-Regalbediengeräte 62 vorgesehen (hier z.B. zwei pro Regalebene) als in der zweiten Regalgasse 34-2 (ein Einebenen-RBG 62 pro Regalebene) und in der j-ten Regalgasse 34-j (ein Shuttle 62 pro Regalebene 54). Im ersten mittleren Regal 26-1 sind (pro Regalebene 54) zwei Gassenwechseleinheiten 38-1 und 38-2 vorgesehen. Im zweiten mittleren Regal 26-2 und im i-ten mittleren Regal 26-i ist z.B. nur noch eine einzige Gassenwechseleinheit 38 vorgesehen.

Eine geometrische Verteilung bzw. Positionierung der Gassenwechseleinheiten 38 in der Längsrichtung X des Systems 10 bzw. der Regalanordnung 12 wird in der Querrichtung Z vorzugsweise immer breiter, je mehr man sich dem Auslagerungsregal 22 nähert. Dies drückt sich in der Fig. 5B dadurch aus, dass die Basis des gezeigten Dreiecks in der Auslagerungsrichtung 70 immer breiter wird. Vorzugsweise sind die Gassenwechseleinheiten 38 symmetrisch zu einer (nicht dargestellten) Mittelachse verteilt, die sich parallel zur Querrichtung Z durch die Regalanordnung 12 bzw. 12' erstreckt. Ähnliches gilt für die Regalbediengeräte 36 bzw. deren übliche Fahrbereiche, die hier nicht näher dargestellt sind.

Aus der Fig. 5A erkennt man auch, dass vorzugsweise für jedes Regalbediengerät 36 jeweils mindestens eine Gassenwechseleinheit 38 vorhanden ist. So ist jedem der Einebenen-Regalbediengeräte 62 in der ersten Regalgasse 34-1 eine eigene Gassenwechseleinheit 38-1 bzw. 38-2 im ersten mittleren Regal 26-1 zugeordnet. Dem Einebenen-Regalbediengerät 62 in der Regalgasse 34-2 ist eine Gassenwechseleinheit 38 im zweiten mittleren Regal 26-2 zugeordnet. Es versteht sich, dass sich die Anzahl der Gassenwechseleinheiten 38 vorzugsweise proportional zur Anzahl der in der zugeordneten Regalgasse 34 vorgesehenen Regalbediengeräte 36 verhält.

Das Gleiche gilt für die Anzahl der Vertikalförderer 40 in Bezug auf die zugeordneten Regalbediengeräte 36 in der direkt angrenzenden Regalgasse 34, die in der Fig. 5A für die Vertikalförderer 40-1 und 40-2 durch die erste Regalgasse 34-1 repräsentiert wird. Vorzugsweise ist jedem Einebenen-Regalbediengerät 62 in der ersten Regalgasse 34-1 mindestens ein (eigener) Vertikalförderer 40 zugeordnet. Natürlich können jedem der Regalbediengeräte 36 auch noch mehr Gassenwechseleinheiten 38 und/oder Vertikalförderer 40 zugeordnet werden, wobei diese Gassenwechseleinheiten 38 und diese Vertikalförderer 40 dann auch tatsächlich physisch vorhanden sind und nicht nur datentechnisch zugeordnet werden.

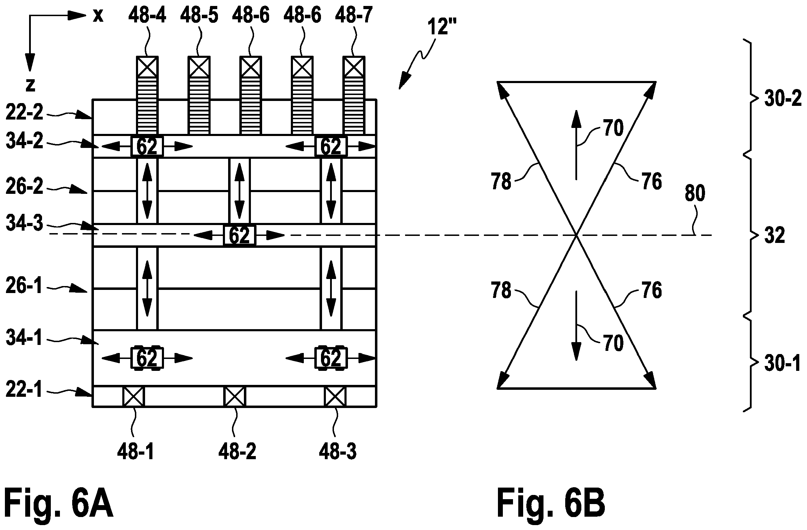

Fig. 6A zeigt eine Draufsicht auf eine weitere Ausführungsform einer Regalanordnung 12". Fig. 6B veranschaulicht analog zu Fig. 5B die entsprechenden Dichten 76 und 78 für die Regalanordnung 12" der Fig. 6A.

Die Regalanordnung 12" der Fig. 6A ist ähnlich aufgebaut wie die anderen Regalanordnungen 12 und 12'. Die Regalanordnung 12" unterscheidet sich im Wesentlichen nur dadurch, dass zwei Auslagerungsregale 22-1 und 22-2 vorgesehen sind. Jedes der Auslagerungsregale 22-1 und 22-2 liegen in einem der äußeren Bereiche 30-1 und 30-2. Im mittleren Bereich 32 sind exemplarisch zwei mittlere Regale 26-1 und 26-2 vorgesehen, wobei im ersten mittleren Regal 26-1 zwei Gassenwechseleinheiten 38 vorgesehen sind, die in der Längsrichtung X vorzugsweise symmetrisch verteilt angeordnet sind. Das zweite mittlere Regal 26" umfasst exemplarisch drei Gassenwechseleinheiten 38, die ebenfalls symmetrisch in der Längsrichtung X verteilt angeordnet sein können.

In der ersten Regalgasse 34-1 und der zweiten Regalgasse 34-2 sind jeweils mehrere RBG 36 (pro Regalebene 54), hier z.B. in Form von Einebenen-RBG 62, vorgesehen. Im Beispiel der Fig. 6A sind exemplarisch zwei Einebenen-RBG 62 jeweils vorgesehen. Eine dritte, mittlere Regalgasse 34-3 zwischen den beiden mittleren Regalen 26-1 und 26-2 wird jeweils mit einem Einebenen-RBG 62 (pro Regalebene 54) betrieben.

Die Vertikalförderer 40-1 bis 40-3 sind in das erste Auslagerungsregal 22-1 integriert. Die Vertikalförderer 40-4 bis 40-7 sind von außen an das zweite Auslagerungsregal 22-2 gekoppelt. Auch die Vertikalförderer 40 sind in der Längsrichtung X vorzugsweise gleichmäßig verteilt angeordnet.

Die Fig. 6B bringt zum Ausdruck, dass die RBG-Dichte 76 ausgehend von einer Mittelachse 80 in der Querrichtung Z in Richtung der Auslagerungsregale 22-1 und 22-2 jeweils zunimmt. Das Gleiche gilt für die Gassenwechseleinheiten-Dichte 78.

Generell gilt, dass die mittleren Regale 26 vorzugsweise gar keine Einrichtungen zum vertikal Förderern der Handhabungseinheiten 66 aufweisen. Natürlich kann es im Einzelfall erforderlich sein, auch in den mittleren Regalen bzw. an die mittleren Regale 26 eine Einrichtung zum vertikal Fördern vorzusehen. Der wesentliche Anteil des Materialflusses in der vertikalen Richtung erfolgt jedoch ausschließlich im Bereich der Auslagerungsregale 22. Die mittleren Regale weisen also im Wesentlichen die Regalfächer 52 sowie die Gassenwechseleinheiten 38 auf, wohingegen die Auslagerungsregale 22 die Vertikalförderer 40 umfassen.

Ferner ist es möglich, die Regalfächer 52 in den Auslagerungsregalen 22 durch (hier nicht näher gezeigte und beschriebene) Durchlaufkanäle 60 zu substituieren. Derartige Durchlaufkanäle 60 ermöglichen eine Kommissionierung von Einzelartikeln aus den Handhabungseinheiten 66 heraus, ohne dass die Handhabungseinheiten 66 die jeweilige Regalanordnung 12 tatsächlich verlassen (Piece-Picking). Selbstverständlich können auch die Handhabungseinheiten 66 selbst aus den Durchlaufkanälen 60 heraus kommissioniert werden (Case-Picking). Üblicherweise verlassen die Handhabungseinheiten 66 die Regalanordnung 12, um zu hier nicht gezeigten Kommissionierstationen, Palletierstationen, Packstationen oder anderen Stationen und Bereichen des Systems 10 transportiert zu werden. Wenn die Auslagerungsregale 22 Durchlaufkanäle 60 aufweisen, ist es von Vorteil weitere Vertikalförderer seitlich an einer oder beiden Stirnseite der entsprechenden Regalgasse anzuordnen, damit Handhabungseinheiten 66, die von höheren Regalebenen 54 kommen, nicht einmal quer durch die gesamte Regalanordnung bewegt werden müssen, um die Vertikalförderer an den Längsseiten zu erreichen, wo dann die Höhe überbrückt wird, um anschließend quer durch die Regalanordnung auf der Höhe der Durchlaufkanäle zu den Durchlaufkanälen zurückbewegt zu werden.

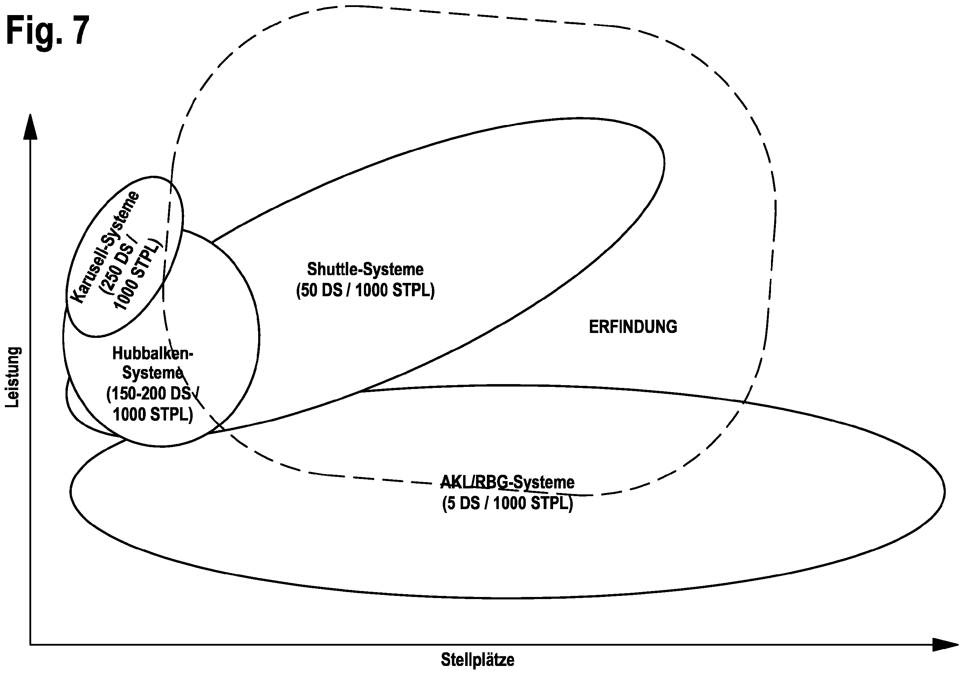

Fig. 7 zeigt eine Übersicht verschiedener Kombinationen von Lagermaschinen (d.h. Regalbediengeräten) mit Regalen, wobei eine Lagerkapazität (X-Achse) gegenüber einer Leistung (z.B. Doppelspiele) (Y-Achse) aufgetragen ist. Ein Quotient aus diesen beiden Größen (Doppelspiele/1000 Stellplätze) stellt ein Maß für eine mit dem jeweiligen System erreichbare Dynamik dar.

Insbesondere sind vier klassische bzw. konventionelle Bereiche gezeigt, die mit "AKL/RBG", "Shuttle-Systeme", "Hubbalken" und "Karussell-Systeme" bezeichnet sind. Der (Dynamik-) Bereich der Offenbarung ist mit "Cuby-3D" bezeichnet.

Der konventionelle "AKL/RBG"-Bereich zeichnet sich durch einen geringeren Durchsatz (z.B. 5 Doppelspiele/1.000 Stellplätze aus) über nahezu die gesamte Breite von möglichen Anzahlen von Stellplätzen aus. Dies bedeutet, dass sich der Durchsatz nicht wesentlich verändert, wenn man die Anzahl der Stell- bzw. Regalplätze ändert.

Anders verhält es sich für den "Shuttle-System"-Bereich. Dort lässt sich der Durchsatz (Doppelspiele) mit zunehmender Anzahl von Stellplätzen steigern. Mit einem klassischen Shuttle-System (Shuttle auf jeder Ebene, stirnseitige Vertikalförderer für stirnseitige Ein/Auslagerung) lässt sich eine Dynamik von z.B. 50 Doppelspiele pro 1.000 Stellplätzen erreichen.

Der "Hubbalken"-Bereich ist verhältnismäßig klein und zeichnet sich durch einen höheren Durchsatz bei wenigen Stellplätzen aus (150-200 Doppelspiele/1000 Stellplätze).

Eine ähnliche Aussage gilt für den "Karussell-System"-Bereich, der sich durch eine noch höheren Dynamik (250 Doppelspiele/1000 Stellplätze) auszeichnet, aber bei einer engeren Anzahl von Stellplätzen.

Die vorliegende Offenbarung zeichnet sich durch den "Cuby-3D"-Bereich aus, der in Fig. 7 zwischen dem "AKL/RBG"-Bereich und dem "Shuttle-System"-Bereich liegt und diese teilweise überlappt. Dies liegt daran, dass bei der vorliegenden Erfindung in der Querrichtung ausgelagert wird und die beiden konventionellen Bereiche mit einer stirnseitigen Auslagerung arbeiten. Bei der vorliegenden Erfindung kann jeder der Vertikalförderer auf jede Handhabungseinheiten aus jeder Regalgasse zugreifen. Die Dynamik kann gesteigert werden, indem lediglich mehr Vertikalförderer in das Auslagerungsregal eingebaut werden, ohne die Anzahl der Regalgassen zu erhöhen. Der Durchsatz kann verringert werden, indem weniger Vertikalförderer vorgesehen werden (z.B. 4 Vertikalförderer für Regalgassen) als beim klassischen Ansatz (4 Gassen benötigen 4 Vertikalförderer). Die Erfindung lässt sich anders skalieren. Es müssen keine zusätzlichen Regalgassen vorgesehen werden, um die Leistung zu steigern. Zum Beispiel resultiert allein eine Erhöhung der Anzahl der Vertikalförderer, ohne Änderung der Anzahl der Gassen und/oder Stellplätze, in einer höheren Anzahl von Doppelspielen. Der Bereich der Erfindung bildet eine "Brücke" zwischen den klassischen Shuttle-Systemen und den klassischen AKL-System, er erweitert sie sogar noch.

Es versteht sich, dass die oben für eine Auslagerung gegebenen Erläuterungen bei umgekehrter Materialflussrichtung auch für die Einlagerung gelten.

### Bezugszeichenliste

- 10: Lager- und Kommissioniersystem
- 12: Regalanordnung
- 14: Regale
- 16: Einzelregale
- 18: Doppelregale
- 20: Äußere Regale
- 22: Auslagerungsregal
- 24: Lagerregal
- 26: mittlere Regale
- 28: Bereiche
- 30: Äußerer Bereich
- 32: Mittlerer Bereich
- 34: Regalgassen
- 36: Regalbediengeräte (RBG)
- 37: Lastaufnahmemittel (LAM)
- 38: Gassenwechseleinheit
- 40: Vertikalförderer
- 42: Auslagerungsschnittstelle
- 44: Steuereinrichtung
- 46: Fördertechnik
- 48: Arbeitsplätze
- 50: Wareneingang (WE)/Warenausgang (WA)
- 52: Regalfächer
- 54: Regalebenen
- 56: Lange Seite
- 58: Kurze Seite
- 60: Durchlaufkanäle
- 62: Einebenen-RBG/Shuttle
- 64: Mehrebenen-RBG
- 66: Handhabungseinheiten
- 68: Einlagerungsrichtung
- 70: Auslagerungsrichtung
- 72: Rand von 28, 30 und 32
- 74: Fördereinrichtung
- 76: RBG-Dichte
- 78: Gassenwechseleinheiten-Dichte
- 80: Mittelachse

## Patentansprüche

1. Lager- und Kommissioniersystem (10) zum Auslagern von Handhabungseinheiten (66), das aufweist:
eine Regalanordnung (12) mit einer Vielzahl von Regalen (14), die sich entlang einer Längsrichtung (X) des Systems (10) erstrecken und ausgerichtet sind und die in einer Höhenrichtung (Y) des Systems (10) mehrere Regalebenen (54) übereinander aufweisen, wobei jedes der Regale (14) eine Vielzahl von Regalfächern (52) aufweist, die in der Längsrichtung nebeneinander und in der Höhenrichtung übereinander in den Regalebenen (54) angeordnet sind, wobei eine Länge der Regale (14) parallel zur Längsrichtung (X) verläuft und eine Breite der Regale (14) parallel zu einer Querrichtung (Z) verläuft, wobei die Regalanordnung (12) in der Querrichtung (Z) des Systems einen mittleren Bereich (32) und zwei äußere Bereiche (30) aufweist, die den mittleren Bereich (32) in der Querrichtung (Z) zwischen sich einschließen, und wobei die Regalanordnung (12) aufweist:
ein erstes äußeres Regal (20), das in einem der äußeren Bereiche (30) der Regalanordnung (12) positioniert ist und das ein erstes Auslagerungsregal (22) definiert, aus welchem auszulagernde Handhabungseinheiten (66) bzw. darin enthaltene Artikel in der Querrichtung (Z) die Regalanordnung (12) verlassen;
mindestens ein mittleres Regal (26), das in dem mittleren Bereich (32) der Regalanordnung (12) positioniert ist;
eine erste Regalgasse (34), die sich parallel zur Längsrichtung (X) erstreckt und die in der Querrichtung (Z) zwischen dem ersten äußeren Regal (20) und den mittleren Regalen (26) positioniert ist; und
eine zweite Regalgasse (34), die auf einer Seite der mittleren Regale (26) positioniert ist, die der ersten Regalgasse (34) in der Querrichtung (Z) gegenüberliegt;
wobei das System (10) zudem aufweist:
eine Vielzahl von Regalbediengeräten (36), die in den Regalgassen (34) in der Längsrichtung (X) horizontal verfahrbar sind und die jeweils ein Lastaufnahmemittel (37) aufweisen, das zum Transferieren der Handhabungseinheiten (6) im Wesentlichen in der Querrichtung (Z) eingerichtet ist, wobei in jeder der Regalgassen (34) mindestens eines der Regalbediengeräte (36) vorgesehen ist; und mindestens einen ersten Vertikalförderer (40), wobei jeder der ersten Vertikalförderer (40) ausschließlich mit dem ersten Auslagerungsregal (14) verbunden ist oder in das erste Auslagerungsregal (22) integriert ist;
**gekennzeichnet dadurch, dass** das System (10) zudem aufweist:
eine Vielzahl von regalintegrierten Gassenwechseleinheiten (38), die fest in die Regale (14) eingebaut sind und die jeweils eingerichtet sind, die Handhabungseinheiten (66) in der Querrichtung (Z) durch eines der mittleren Regal (26) hindurch zu bewegen, wobei jedem der mittleren Regale (26) und jeder Regalebene (54) des entsprechenden mittleren Regals (26) mindestens eine Gassenwechseleinheit (38), die zusätzlich zu den Regalfächern (52) vorgesehen ist, zugeordnet ist.

2. System nach Anspruch 1, wobei in der ersten Regalgasse (34-1) mindestens zwei der Regalbediengeräte (36, 62-1, 62-2) vorgesehen sind, die in der Längsrichtung (X) nicht aneinander vorbei fahren können.

3. System nach einem der Ansprüche 1 oder 2, wobei die mittleren Regale (26) ausschließlich Regalfächer (52) und Gassenwechseleinheiten (38) aufweisen.

4. System nach einem der Ansprüche 1 bis 3, wobei jedes der Regalbediengeräte (36) ein Einebenen-Regalbediengerät (62) ist und wobei in jeder der Regalgassen (34) auf jeder Regalebene (54) mindestens eines der Einebenen-Regalbediengeräte (62) vorgesehen ist.

5. System nach einem der Ansprüche 1 bis 4, wobei in der ersten Regalgasse (34-1) mindestens so viele Regalbediengeräte (36) wie erste Vertikalförderer (40) vorgesehen sind.

6. System nach einem der Ansprüche 1 bis 5, wobei die Regalanordnung ferner mindestens eine dritte Regalgasse (34-3) aufweist, wobei jede der dritten Regalgassen (34-3) in der Querrichtung (Z) zwischen zwei der mittleren Regalen (26) positioniert ist, die in der Querrichtung (Z) benachbart und beabstandet zu einander angeordnet sind.

7. System nach einem der Ansprüche 1 bis 6, wobei die Regalanordnung (12) ein zweites äußeres Regal (20-2) aufweist, das in dem anderen der äußeren Bereiche (30-2) in der Querrichtung (Z) gegenüberliegend zum ersten äußeren Regal (20) angeordnet ist und das ein zweites Auslagerungsregal (22) definiert, aus welchem die Handhabungseinheiten (66) bzw. darin enthaltene Artikel die Regalanordnung (12) in der Querrichtung (Z) verlassen.

8. System nach einem der Ansprüche 1 bis 7, wobei die Regalfächer (52) sowie die Lastaufnahmemittel (37) der Regalbediengeräte (36) zur mehrfachtiefen Lagerung der Handhabungseinheiten (66) eingerichtet sind.

9. System nach einem der Ansprüche 1 bis 8, das ferner eine Steuereinrichtung (44) aufweist, die einen Materialfluss von auszulagernden Handhabungseinheiten (66) so steuert, dass auszulagernde Handhabungseinheiten (66) im Wesentlichen entlang der Querrichtung (Z) durch die Regalanordnung (12) zu einer der Auslagerungsschnittstellen (42) bewegt werden, indem:
eine auszulagernde Handhabungseinheit (66) von einem der Regalbediengeräte (66) aus einem der Regalfächer (52) ausgelagert wird und anschließend an eine der Gassenwechseleinheiten (38) oder an einen der Vertikalförderer (40) abgegeben wird;
die abgegebene Handhabungseinheit (66) von der einen der Gassenwechseleinheiten (38) durch das entsprechende mittlere Regal (26) bewegt wird, um von einem anderen der Regalbediengeräte (36) abgeholt und an einen der Vertikalförderer (40) oder an eine andere der Gassenwechseleinheiten (38) in einem anderen der mittleren Regale (26) abgegeben zu werden; und
der eine der Vertikalförderer (40) die abgegebene Handhabungseinheit (66) vertikal zu seiner Auslagerungsschnittstelle (42) fördert;
und dass die auszulagernden Handhabungseinheiten (66)im Wesentlichen in der Querrichtung (Z) durch die Regalanordnung (12) hindurch bewegt werden, um die Regalanordnung über die Auslagerungsregale (22) zu verlassen.

## Claims

1. A storage and picking system (10) for retrieving handling units (66) comprising:
a rack arrangement (12) including a plurality of racks (14), which extend and are aligned along a longitudinal direction (X) of the system (10) and which comprise several rack planes (54) on top of each other in a height direction (Y) of the system (10), wherein each of the racks (14) comprises a plurality of rack compartments (52) arranged side-by-side in the longitudinal direction and on top of each other in the rack planes (54), wherein length of the racks (14) extends parallel to the longitudinal direction (X), and width of the racks (14) extends parallel to a transversal direction (Z), wherein the rack arrangement (12) comprises, in the transversal direction (Z) of the system, a central region (32), and two outer regions (30) enclosing the central region (32) in the transversal direction (Z) between each other, and wherein the rack arrangement (12) comprises:
a first outer rack (20) positioned in one of the outer regions (30) of the rack arrangement (12) and defining a first retrieval rack (22) from which handling units (66), which are to be retrieved, or articles contained therein leave the rack arrangement (12) in the transversal direction (Z);
at least one central rack (26) positioned in the central region (32) of the rack arrangement (12);
a first rack aisle (34) extending parallel to the longitudinal direction (X) and being positioned in the transversal direction (Z) between the first outer rack (20) and the central racks (26); and
a second rack aisle (34) positioned at a side of the central racks (26) opposite to the first aisle (34) in the transversal direction (Z);
wherein the system (10) further comprises:
a plurality of storage and retrieval devices (36) movable horizontally in the rack aisles (34) in the longitudinal direction (X), and respectively comprising a load-handling device (37) configured for transferring the handling units (6) substantially in the transversal direction (Z), wherein at least one of the storage and retrieval devices (36) is provided in each of the rack aisles (34); and
at least one first vertical conveyor (40), wherein each of the first vertical conveyors (40) is connected exclusively to the first retrieval rack (14), or is integrated into the first retrieval rack (22);
**characterized in that** the system (10) further comprises:
a plurality of rack-integrated aisle-exchange units (38) which are fixedly installed in the racks (14), and respectively configured to move the handling units (66) in the transversal direction (Z) through one of the central racks (26), wherein at least one of the aisle-exchange units (38), which is provided additionally to the rack compartments (52), is assigned to each of the central racks (26) and each rack plane (54) of the corresponding central rack (26).

2. The system of claim 1, wherein at least two of the storage and retrieval devices (36, 62-1, 62-2), which cannot pass each other in the longitudinal direction (X), are provided in the first rack aisle (34-1).

3. The system of any of claims 1 or 2, wherein the central racks (26) comprise rack compartments (52) and aisle-exchange units (38) only.

4. The system of any of claims 1 to 3, wherein each of the storage and retrieval devices (36) is a single-plane storage and retrieval device (62), and wherein at least one of the single-plane storage and retrieval devices (62) is provided in each of the rack aisles (34) in each rack plane (54).

5. The system of any of claims 1 to 4, wherein as many storage and retrieval devices (36) as first vertical conveyors (40) are provided in the first rack aisle (34-1).

6. The system of any of claims 1 to 5, wherein the rack arrangement further comprises at least one third rack aisle (34-3), wherein each of the third rack aisles (34-3) is positioned in the transversal direction (Z) between two of the central racks (26), which are arranged adjacent and distanced to each other in the transversal direction (Z).

7. The system of any of claims 1 to 6, wherein the rack arrangement (12) comprises a second outer rack (20-2), which is arranged in the other one of the outer regions (30-2) in the transversal direction (Z) opposite to the first outer rack (20), and defines a second retrieval rack (22) from which the handling units (66), or articles contained therein, leave the rack arrangement (12) in the transversal direction (Z).

8. The system of any of claims 1 to 7, wherein the rack compartments (52), as well as the load-handling devices (37) of the storage and retrieval devices (36), are configured for multiple-deep storing of the handling units (66).

9. The system of any of claims 1 to 9, further comprising a control device (44) controlling a material flow of to-be retrieved handling units (66) so that the to-be retrieved handling units (66) are moved substantially along the transversal direction (Z) through the rack arrangement (12) to one of the retrieval interfaces (42) by:
retrieving one to-be retrieved handling unit (66) by one of the storage and retrieval devices (66) from one of the rack compartments (52), and subsequently delivering to one of the aisle-exchange units (38), or to one of the vertical conveyors (40);
moving the delivered handling unit (66) by the one of the aisle-exchange units (38) through the corresponding central rack (26) for being retrieved by another one of the storage and retrieval devices (36) and for being delivered to one of the vertical conveyors (40), or to another one of the aisle-exchange units (38), in another one of the central racks (26); and
conveying, by the one of the vertical conveyors (40), the delivered handling unit (66) vertically to the retrieval interface (42) thereof;
and so that the to-be retrieved handling units (66) are moved substantially in the transversal direction (Z) through the rack arrangement (12) for leaving the rack arrangement via the retrieval racks (22).

## Revendications

1. Système de stockage et de préparation de commandes (10) destiné à transférer des unités de manutention (66), ledit système comportant :
un ensemble de rayonnages (12) comprenant un grand nombre de rayonnages (14) qui s'étendent et sont orientés le long d'une direction longitudinale (X) du système (10) et qui comportent une pluralité de niveaux de rayonnage (54) les uns au-dessus des autres dans une direction verticale (Y) du système (10), chacun des rayonnages (14) comportant un grand nombre de compartiments de rayonnage (52) qui sont disposés dans les niveaux de rayonnage (54) les uns à côté des autres dans la direction longitudinale et les uns au-dessus des autres dans la direction verticale, une longueur des rayonnages (14) s'étendant parallèlement à la direction longitudinale (X) et une largeur des rayonnages (14) s'étendant parallèlement à une direction transversale (Z), l'ensemble de rayonnages (12) comportant dans la direction transversale (Z) du système une région médiane (32) et deux régions extérieures (30) qui contiennent entre elles la région médiane (32) dans la direction transversale (Z), et l'ensemble de rayonnages (12) comportant :
un premier rayonnage extérieur (20) qui est positionné dans l'une des régions extérieures (30) de l'ensemble de rayonnages (12) et qui définit un premier rayonnage de transfert (22) à partir duquel des unités de manipulation (66) à transférer ou des articles contenus à l'intérieur de celles-ci quittent l'ensemble de rayonnages (12) dans la direction transversale (Z) ;
au moins un rayonnage médian (26) qui est positionné dans la région médiane (32) de l'ensemble de rayonnages (12) ;
une première allée de rayonnages (34) qui s'étend parallèlement à la direction longitudinale (X) et qui est positionnée entre le premier rayonnage extérieur (20) et les rayonnages médians (26) dans la direction transversale (Z) ; et
une deuxième allée de rayonnages (34) qui est positionnée sur un côté des rayonnages médians (26) qui est opposé à la première allée de rayonnages (34) dans la direction transversale (Z) ;
le système (10) comportant en outre :
un grand nombre de gerbeurs (36) qui peuvent être déplacés horizontalement dans la direction longitudinale (X) dans les allées de rayonnages (34) et qui comportent chacun un moyen de réception de charge (37) qui est adapté pour transférer les unités de manutention (6) sensiblement dans la direction transversale (Z), au moins un des gerbeurs (36) étant prévu dans chacune des allées de rayonnages (34) ; et au moins un premier convoyeur vertical (40), chacun des premiers convoyeurs verticaux (40) étant exclusivement relié au premier rayonnage de transfert (14) ou étant intégré dans le premier rayonnage de transfert (22) ;
**caractérisé en ce que** le système (10) comporte en outre :
un grand nombre d'unités de changement d'allée (38), intégrées aux rayonnages, qui sont installées de manière permanente dans les rayonnages (14) et qui sont chacune adaptées pour déplacer les unités de manutention (66) dans la direction transversale (Z) à travers l'un des rayonnages médians (26), au moins une unité de changement d'allée (38), qui est prévue en plus des compartiments de rayonnage (52), étant associée à chacun des rayonnages médians (26) et à chaque niveau de rayonnage (54) du rayonnage médian correspondant (26).

2. Système selon la revendication 1, au moins deux des gerbeurs (36, 62-1, 62-2), qui ne peuvent pas se croiser dans la direction longitudinale (X), étant prévus dans la première allée de rayonnages (34-1).

3. Système selon l'une des revendications 1 et 2, les rayonnages médians (26) comportant exclusivement des compartiments de rayonnage (52) et des unités de changement d'allée (38).

4. Système selon l'une des revendications 1 à 3, chacun des gerbeurs (36) étant un gerbeur à un seul niveau (62) et l'un au moins des gerbeurs à un seul niveau (62) étant prévu dans chacune des allées de rayonnages (34) à chaque niveau de rayonnage (54).

5. Système selon l'une des revendications 1 à 4, au moins autant de gerbeurs (36) que de premiers convoyeurs verticaux (40) étant prévus dans la première allée de rayonnages (34-1).

6. Système selon l'une des revendications 1 à 5, l'ensemble de rayonnages comportant en outre au moins une troisième allée de rayonnages (34-3), chacune des troisièmes allées de rayonnages (34-3) étant positionnée dans la direction transversale (Z) entre deux des rayonnages médians (26) qui sont disposés de manière adjacente et à distance l'un de l'autre dans la direction transversale (Z).

7. Système selon l'une des revendications 1 à 6, l'ensemble de rayonnages (12) comportant un deuxième rayonnage extérieur (20-2) qui est disposé dans l'autre des régions extérieures (30-2) à l'opposé du premier rayonnage extérieur (20) dans la direction transversale (Z) et qui définit un deuxième rayonnage de transfert (22) à partir duquel les unités de manipulation (66) ou les articles contenus à l'intérieur quittent l'ensemble de rayonnages (12) dans la direction transversale (Z).

8. Système selon l'une des revendications 1 à 7, les compartiments de rayonnage (52) et les moyens de réception de charge (37) des gerbeurs (36) étant adaptés au stockage multi-profondeur des unités de manutention (66).

9. Système selon l'une des revendications 1 à 8, qui comporte en outre un dispositif de commande (44) qui commande un flux de matériau provenant d'unités de manutention (66) à transférer de telle sorte que les unités de manutention (66) à transférer sont déplacées sensiblement suivant la direction transversale (Z) à travers l'ensemble de rayonnages (12) vers l'une des interfaces de transfert (42) du fait que :
une unité de manutention (66) à transférer est transférée d'un des compartiments de rayonnage (52) par l'un des gerbeurs (66) puis est délivrée à l'une des unités de changement d'allée (38) ou à l'un des convoyeurs verticaux (40) ;
l'unité de manutention (66) délivrée est déplacée de l'une des unités de changement d'allée (38) à travers le rayonnage médian correspondant (26) pour être récupérée par un autre des gerbeurs (36) et être délivrée à l'un des convoyeurs verticaux (40) ou à une autre des unités de changement d'allée (38) dans un autre des rayonnages médians (26) ; et
l'un des convoyeurs verticaux (40) transporte l'unité de manutention (66) délivrée verticalement vers son interface de transfert (42) ; et
les unités de manutention (66) à transférer sont déplacées sensiblement dans la direction transversale (Z) à travers l'ensemble de rayonnages (12) afin de quitter l'ensemble de rayonnages par le biais des rayonnages de transfert (22).
